(19) Europäisches Patentamt
European Patent Office
Office européen des brevets

(11) Numéro de publication: 0 153 967
B1

(12) **FASCICULE DE BREVET EUROPÉEN**

(45) Date de publication du fascicule du brevet: 27.04.88

(51) Int. Cl.⁴: A 23 C 9/146

(21) Numéro de dépôt: 84102225.4

(22) Date de dépôt: 02.03.84

(54) **Procédé de traitement de sous-produits laitiers.**

(43) Date de publication de la demande: 11.09.85 Bulletin 85/37

(45) Mention de la délivrance du brevet: 27.04.88 Bulletin 88/17

(84) Etats contractants désignés: CH DE FR GB IT LI NL SE

(56) Documents cité:
DE-A-2 439 652
FR-A-2 142 812
FR-A-2 391 653
US-A-4 358 464

NETHERLANDS MILK & DAIRY JOURNAL, vol. 33, no. 4, 1979, pages 181-192, Wageningen, NL; R. DELBEKE: "Purification of an ultrafiltration permeate with adsorbent and ion-exchange resins" IDEM

Le dossier contient des informations techniques présentées postérieurement au dépôt de la demande et ne figurant pas dans le présent fascicule.

(73) Titulaire: SOCIETE DES PRODUITS NESTLE S.A., Case postale 353, CH- 1800 Vevey (CH)
(84) Etats contractants désignés: CH DE GB IT LI NL SE

(73) Titulaire: NESTEC S.A., Avenue Nestlé 55, Vevey (CH)
(84) Etats contractants désignés: FR

(72) Inventeur: Chaveron, Michel, Avenue du Sully 68, CH- 1814 La Tour- de- Peilz (CH)
Inventeur: Neumann, Fred, Honeggweg 6B, CH- 3612 Steffisburg (CH)

EP 0 153 967 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

**Description**

La présente invention se rapporte à un procédé de traitement de sous-produits laitiers en vue d'en diminuer la teneur en cations minéraux.

Le petit-lait est le sous-produit de la transformation du lait en fromage, en caséine ou en dérivés de la caséine. La valorisation de ce sous-produit est rendue nécessaire pour diminuer le volume des effluents devant être traités dans les stations d'épuration. La majeure partie de celui-ci est séchée en poudre utilisée dans les mélanges fourragers. D'autres valorisations permettant de dégager une meilleure valeur ajoutée nécessitent sa déminéralisation. On peut citer sa transformation par l'hydrolyse du lactose qu'il contient en glucose et galactose comme composant des crèmes glacées, son utilisation comme substrat dans la production d'alcool par fermentation et principalement sa transformation en constituant des laits humanisés et des laits spéciaux en alimentation infantile. Cette dernière application en particulier requiert une déminéralisation poussée compatible avec une faible charge osmolaire des laits infantiles.

La démiéralisation serait théoriquement possible par ultrafiltration ou osmose inverse mais l'osmose inverse est trop spécifique et l'ultrafiltration s'accompagne d'une perte importante en lactose, sucre de valeur qu'on désire récupérer. En pratique, on a utilisé deux procédés différents séparément ou en combinaison pour déminéraliser le petit-lait : l'électrodialyse et l'échange d'ions.

Dans l'électrodialyse, les sels ionisés d'une solution migrent par l'action d'un champ électrique à travers des membranes sélectivement perméables aux cations et aux anions. Cette méthode favorise l'élimination des ions monovalents et ne permet de déminéraliser qu'à grands frais audelà de 70 %. C'est pourquoi on l'utilise pour déminéraliser par exemple entre 40 et 45 % préalablement à l'échange d'ions lorsqu' on désire une déminéralisation poussée, comme par exemple dans le brevet français No. 2 391 653.

L'échange d'ions tire parti des équilibres ioniques existant entre une phase solide (la résine) et une phase liquide (le produit à déminéraliser) Cette technique fait appel aux phénomènes d'affinité et d'exclusion selon lesquels le liquide abandonne les ions indésirables (par exemple les cations) dans la phase de saturation ou d'épuisement de la résine, les ions indésirables étant remplacés par les ions choisis (par exemple $H^+$) dont on avait chargé l'échangeur d'ions au préalable lors de la phase de régénération. Dans le cas du petit-lait les cations dont on désire diminuer la quantité sont les cations alcalins ($Na^+$, $K^+$, monovalents) et alcalino-terreux ($Ca^{++}$, $Mg^{++}$, divalents), les anions étant principalement l'ion $Cl^-$. Si la désanionisation ne pose pas de problème car elle est facilement réalisable au moyen d'une résine anionique faible en cycle $OH^-$ dont la régénération est facile, ce n'est pas le cas de la décationisation. Classiquement elle s'effectue par passage sur une résine cationique forte en cycle $H^+$ qui ne peut être régénérée qu'en utilisant un grand excès d'acide chlorhydrique concentré. On ne sait que faire de ce réactif qu'il faut neutraliser, en général par la soude avant de rejeter le sel obtenu dans une station d'épuration. Il faut entreposer et manipuler ces produits chimiques dangereux et corrosifs et leur neutralisation charge les eaux usées de grandes quantités de sel.

Selon le brevet français No. 2 390 106, on propose de déminéraliser le petit-lait par un procédé qui consiste à le faire passer à travers un échangeur d'anions en forme $HCO_3^-$ puis a travers un échangeur de cations en forme $NH_4^+$ en lits superposés, à régénérer les résines par une solution d'hydrogénocarbonate d'ammonium et à évaporer l'hydrogénocarbonate d'ammonium dont s'est chargé le petit-lait sous forme de dioxyde de carbone et d'ammoniac en tirant parti de sa décomposition thermique. Ce procédé séduisant bien que relativement complexe présente l'inconvénient de nécessiter une régénération supplémentaire des lits de résine par l'acide chlorhydrique et la soude tous les 2 à 4 cycles de déminéralisation pour préserver la capacité d'adsorption de l'échangeur de cations.

Dans Netherland Milk & Dairy Journal, vol 33, No 4, p. 181 - 192 concernant la purification des perméats d'ultrafiltration, on décrit deux systèmes de colonnes incorporant des résines absorbantes macroporeuses et des résines échangeurs d'ions.

La présente invention a pour but de minimiser les inconvénients attachés à la décationisation des sous-produits laitiers par les méthodes connues.

Elle concerne un procédé de décationisation de petit-lait par échange d'ions au moyen de résines cationiques, dans lequel on traite un petit-lait préalablement concentré jusqu' à une teneur en matières sèches de 19 à 23 % en poids, respectivement un tel petit-lait concentré préalablement déminéralisé à 30-70 % par électrodialyse, caractérisé par le fait qu'on le fait passer d'abord à travers une résine cationique faible non macroporeuse en cycle $H^+$, puis à travers une résine cationique forte non macro-poreuse en cycle $H^+$, jusqu' à atteindre un pH de 1,0 à 2,5 et un taux de décationisation de 60 à 80 %, respectivement un pH de 2,0 à 3,5 et un taux de décationisation de 70 à 95 % dans le cas d'un petit-lait préalablement électrodialysé, qu'on régénère les résines en faisant passer une solution aqueuse concentrée d'un acide à travers la résine cationique forte puis à travers la résine cationique faible, que les résines sont en lits séparés ou stratifiés et que le rapport du volume apparent de résine cationique faible au volume apparent de résine cationique forte est 1:3 à 1:1.

Par petit-lait on entend selon l'invention:

- le petit-lait provenant de la transformation du lait par la présure (doux) ou par voie acide (acide) en fromage, en caséine ou en dérivés de la caséine;
- un petit-lait précèdent ayant subi un traitement préalable d'électrodialyse, déminéralisé à 30 - 70 % (suivant la définition ci-après du taux de déminéralisation);
- un petit-lait acide ayant subi un traitement préalable de neutralisation;
- les produits précédents reconstitués.

Une matière première préférée disponible en grandes quantités est le petit-lait doux de fromagerie dont la composition pondérale approximative et le pH sont les suivants:

| | % |
|---|---|
| Lactose | 4,0 à 5,0 |
| Protéines (essentiellement lactalbumine) | 0,6 à 0,8 |
| Sels minéraux (surtout $Na^+$, $K^+$, $Ca^{++}$) | 0,4 à 0,6 |
| Matières grasses (résiduelles) | 0,2 à 0,4 |
| Matières sèches | 5,3 à 6,6 |
| pH | 5,9 à 6,5 |

On voit que le petit-lait est proportionnellement aux protéines très riche en cations minéraux bien que ceux-ci y soient dans un état de très grande dilution. On concentre le petit-lait, par exemple thermiquement dans des conditions de chauffage modérées jusqu' à une teneur en matières sèches de 19 à 23 % en poids, le petit-lait, avant ou après concentration, est avantageusement débarassé des particules en suspension par clarification et écrémé jusqu' à une teneur résiduelle en matières grasses inférieure à environ 0,05 % en poids. Ces opérations peuvent être effectuées de manière connue par filtration et centrifugation à haute vitesse, par bactofugation, etc.

L'échange d'ions peut être mené en lits stratifiés (dans une même colonne), le produit étant mis en contact avec un mélange de résines cationique faible et cationique forte, ou en lits séparés (colonnes séparées), ce qui est plus favorable du point de vue de la régénération à cause de la néoessité dans le cas des lits stratifiés de régénérer les résines à contre-courant (problèmes mécaniques de tassement des résines).

Dans la forme de mise en oeuvre avantageuse en lits séparés, dans la phase de saturation, le liquide est d'abord envoyé sur une résine cationique faible en cycle $H^+$ (c'est-à-dire chargée en ions $H^+$ apportés par la régénération). Comme résine, on peut employer par exemple une Amberlite® IRC-84 de Rohm & Haas Company consistant en des billes de polymère d'acide acrylique réticulé portant des groupes fonctionnels carboxyliques.

La mise en contact est réalisée par percolation du produit liquide à travers la résine disposée dans une colonne de haut en bas à une température comprise entre 4 et 40°C, de préférence entre 4 et 15°C. La résine cationique faible retient principalement les cations alcalino-terreux-divalents ($Ca^{++}$, $Mg^{++}$).

Ensuite, le liquide sortant au bas de la colonne est percolé de haut en bas à travers une résine cationique forte en cycle $H^+$. On peut employer comme résine par exemple une Amberlite® IR-120 de Rohm & Haas Company consistant en des billes de copolymère de styrène réticulé avec du divinylbenzène portant des groupes fonctionnels sulfoniques. La résine cationique forte se charge avec les cations alcalino-terreux divalents restants (surtout $Ca^{++}$) et principalement avec les cations alcalins monovalents ($Na^+$, $K^+$).

La quantité de petit-lait que l'on peut traiter dépend de la quantité de cations minéraux qu'il contient, de son pH, du pH du petit-lait décationisé que l'on veut obtenir après l'échange d'ions ainsi que du taux de déminéralisation final désiré. Dans cet exposé, le "taux de déminéralisation" représente le rapport, exprimé en %, des quantités de cations éliminés du petit-lait (c'est-à-dire la différence entre les quantités de cations du petit-lait de départ et les quantités résiduelles du petit-lait déminéralisé) aux quantités de cations du lactosérum de départ, ramené aux mêmes pourcentages de matières sèches.

Une première forme d'exécution du présent procédé consiste à traiter un petit-lait à 19 - 23 % de matières sèches concentré comme indiqué précédemment de manière à ce que le pH final soit de 1,0 à 2,5.

Selon un mode de réalisation préféré permettant d'obtenir un pH de 1,8 à 2,1 et un taux de déminéralisation total de 35 à 55 % ou un taux de décationisation de 60 à 80 %, les volumes apparents des résines cationique faible et cationique forte sont dans un rapport, dicté par leurs capacités propres d'échange, de 1:3 à 1:1. Dans une réalisation particulièrement avantageuse, une colonne chargée de résine cationique faible est reliée à deux colonnes de résine cationique forte placées en série. On peut ainsi traiter de 0,8 à 1 kg d'extrait sec par équivalent total d'échange ionique (valence-gramme d'échange par unité de volume de résine, ci-après éq./l ou capacité pratique d'adsorption). Ceci représente un volume de petit-lait à 19-23 % de matières sèches concentré comme indiqué précédemment correspondant à environ 6 x le volume apparent de résine, alors que l'utilisation d'une résine cationique forte seule ne permet de traiter qu'environ 3,5 x le volume de résine. Ainsi, selon l'invention la capacité de la résine cationique forte est utilisée à environ 90 % de la capacité théorique contre 50 à 60 % si celle-ci est utilisée seule.

Selon une seconde forme d'exécution du présent procédé, on procède à l'électrodialyse du petit-lait concentré à 19 - 23 % de matières sèches jusqu' à un taux de déminéralisation (cations et anions) de 30 - 70 % et on traite le produit intermédiaire par échange de cations. Dans ce cas, le pH du produit après la décationisation selon le présent procédé est de 2,0 à 3,5 et le taux de décationisation de 70 à 95 %. On peut ainsi traiter de 1,1 à 2,5 kg d'extrait sec par équivalent total d'échange ionique. Ceci représente un volume de petit-lait concentré à 19 - 23 % allant jusqu' à 15 x le volume de résine mis en oeuvre.

On peut donner l'explication suivante à l'augmentation remarquable de la capacité de décationisation de l'agencement selon le présent procédé par rapport à l'utilisation d'une résine cationique forte seule :

-Au début de la décationisation tous les cations se fixent sur la résine cationique faible, schématiquement, R symbolisant la matrice (partie fixe) de la résine, seuls les cations prédominants étant indiqués par souci de simplification :

(1) RH + $Na^+$, $Ca^{++}$ ⇄ R-Na, = Ca + $H^+$

Ensuite, les ions $Na^+$ sont échangés contre des ions $Ca^{++}$ :

(2) R-Na + $Ca^{++}$ ⇄ R=Ca + $Na^+$

Cette résine fixe environ 50 % des ions $Ca^{++}$ et $Mg^{++}$, la plus grande partie des ions $Na^+$ et $K^+$ se trouvent toujours dans le liquide ainsi qu'environ 50 % des cations alcalino- terreux sous forme de complexes solubles (citrates). Elle agit donc comme un filtre par effet chromatogrphique retenant sélectivement une partie des cations alcalino- terreux.

- La résine cationique forte fixe les cations alcalins ce qui a pour résultat d'abaisser le pH à environ 1,2 :

(3) R-H + $Na^+$, $K^+$ ⇄ R-Na, -K + $H^+$

Dans ces conditions fortement acides les complexes de cations alcalino-terreux se dissocient :

(4) (Ca, Mg - citrate) + $H^+$ → $Ca^{++}$ + acide citrique

Il y a compétition entre les ions alcalins et alcalinoterreux :

(5) R-H + $Ca^{++}$ ⇄ R=Ca + $H^+$

L'épuisement de la résine s'accompagne à la fin de la phase de saturation d'une désorption des ions $Na^+$ à cause de leur faible affinité pour la résine :

(6) R-Na + $K^+$ ⇄ R-K + $Na^+$

Ce phénomène indésirable de fuite ionique est responsable d'une augmentation du pH.

La mesure en continu du pH à la sortie de la dernière colonne de résine cationique forte permet donc un contrôle du degré de saturation.

Pour une bonne mise en oeuvre du procédé, les résines doivent être régénérées. Cette opération est destinée à évacuer les ions qui ont été fixés par les résines et à les y remplacer par ceux qu'on désire introduire dans le liquide à traiter, dans le cas présent $H^+$. La régénération en cycle $H^+$ d'une résine cationique forte est relativement inefficace mais les sites régénérés sont généralement utilisés efficacement pendant la saturation. Il en résulte que la capacité d'une résine cationique forte est dépendante de son degré de régénération. C'est pourquoi une régénération efficace nécessite généralement un large excès d'acide de 1,5 à 6 x la capacité pratique de la résine exprimée en éq./l. Ces proportions dépendent du type de régénérant et du niveau de fuite ionique toléré.

La phase de régénération est réalisée en faisant circuler un acide, par exemple une solution aqueuse d'acide chlorhydrique à une côncentration de 8 - 10 % en poids d'abord à travers la résine cationique forte et ensuite à travers la résine cationique faible, de préference de haut en bas, car une régénération à contre-courant nécessite des moyens mécaniques de blocage du lit de résine qui compliquent sa mise en oeuvre. On a constaté que les résines pouvaient être régénérées avec 30 à 40 % d'acide en moins comparé à la décationisation avec une résine cationique forte seule pour la même capacité pratique.

Le présent procédé rend possible la régénération économique des résines cationiques fortes avec des quantités d'acide inimaginables dans le cas d'un procédé classique. Dans la réalisation avantageuse comportant trois colonnes, c'est-à-dire une colonne de résine cationique faible (5) reliée en série à deux colonnes de résine cationique forte (II et III), la résine de la colonne III est traversée par la totalité de l'acide nécessaire pour la régénération du système, soit pour le niveau de régénération désiré environ 3,3 x sa capacité pratique, la résine de la colonne II utilise environ 2,5 x sa capacité pratique et la résine de la colonne I utilise l'excès d'acide du système soit environ 1,7 x sa capacité pratique.

Selon un mode de réalisation préféré de la phase de régénération, on emploie une partie de l'acide sortant de la colonne de résine cationique faible pour la tête de régénération de la colonne de résine cationique forte la précédant. Si on utilise deux colonnes en série de résine cationique forte, on peut avantageusement les permuter périodiquement de manière à éviter une accumulation d'ions, par exemple $K^+$ et $Ca^{++}$ dans celle précédant la colonne de résine cationique faible (par rapport au sens de régénération).

Le petit-lait décationisé de pH 1,8 à 2,1 obtenu par la mise en oeuvre de la première, forme d'exécution du présent procédé est avantageusement utilisé pour fabriquer des "lacto-protéines" , c'est-à-dire un petit-lait déminéralisé partiellement délactosé. Les conditions de pH permettent une cristallisation facilitée et sélective du lactose (sans entraînement de protéines). Après cristallisation d'environ 1/3 du lactose contenu dans le petit-lait décationisé, on désanionise (essentiellement $Cl^-$) les eaux-mères, par exemple par échange d'anions ou électrodialyse et, après neutralisation et séchage, on obtient des "lacto-protéines" contenant environ 30 à 40 % de protéines et environ 45 à 55 % de lactose en poids des matières sèches.

En variante, on peut s'abstenir de séparer une partie du lactose et obtenir après désanionisation,

neutralisation et séchage un produit lactosérique déminéralisé contenant environ 9 à 15 % de protéines et environ 75 à 85 % de lactose en poids des matières sèches.

Le petit-lait préalablement électrodialysé obtenu par la mise en oeuvre de la deuxième forme d'exécution du présent procédé, de pH 2,0 à 3,5, peut être traité selon le brevet français 2 391 653 et conduire à des produits lactosériques déminéralisés contenant les protéines et le lactose du petit-lait de départ, soit environ 9 à 15 % de protéines et environ 75 à 85 % de lactose.

Les exemples suivants illustrent l'invention. Dans ceux-ci les pourcentages et parties sont pondéraux sauf indication contraire. Le dessin annexé sert à la compréhension des exemples. Dans celui-ci :

La figure 1 est une représentation schématique d'une forme d'exécution d'un cycle de décationisation (exemple 1) et d'un cycle de régénération (exemple 7).

La figure 2 est une représentation schématique d'une forme d'exécution préférée d'un cycle de décationisation (exemple 2) et de deux variantes d'un cycle de régénération (exemples 6 et 8).

**Exemple 1**

Décationisation

On fait passer 365 kg de petit-lait doux (provenant de la coagulation du lait par la présure lors de la fabrication d'Emmental), concentré à un taux de matières sèches de 19,9 % et dont le pH est 6,4 à la température de 13°C avec un débit de 3,6 l/min. successivement (Fig. 1) de haut en bas par le conduit 10 à travers la colonne I, 1 chargée de 12 l (volume apparent) de résine cationique faible Amberlite® IRC-84 (Rohm & Haas Company) puis de haut en bas par le conduit 11 à travers la colonne II,1 chargée de 34 l (volume apparent) de résine cationique forte Amberlite® IR-120 (Rohm & Haas Company).

Le petit-lait décationisé sort par le conduit 12.

Le tableau 1 ci-dessous donne le pH et les quantités des principaux cations du petit-lait de départ, à la sortie de la colonne I, 1 et à la sortie de la colonne II, 1 exprimées en g et en équivalent ainsi que les taux de déminéralisation par cation et total.

**Tableau 1**

| | Petit-lait de départ | | Sortie de la col. I, 1 | | Sortie de la col. II, 1 | | Taux de déminéralisation (%) | |
|---|---|---|---|---|---|---|---|---|
| | g | éq. | g | éq. | g | éq. | par cation | total cations |
| Na+ | 567,7 | 24,7 | 544,7 | 23,7 | 252,6 | 11,0 | 55,5 | |
| K+ | 1979,0 | 50,6 | 1834,3 | 46,9 | 298,2 | 7,6 | 85,0 | |
| Ca++ | 443,2 | 22,1 | 139,2 | 6,9 | 43,2 | 2,1 | 90,5 | |
| Mg++ | 42,3 | 3,5 | 27,9 | 2,3 | 7,5 | 0,6 | 82,9 | |
| Total | - | 100,9 | - | 79,2 | - | 21,3 | - | 78,9 |
| pH | 6,4 | | 4,5 | | 1,6 | | | |

Le tableau 2 ci-dessous donne les quantités des cations principaux retenus sur les colonnes exprimées en g et en équivalent ainsi que la capacité pratique d'adsorption de la résine exprimée en éq./l.

**Tableau 2**

| | Colonne I, 1 g | Colonne I, 1 éq. | Colonne II, 1 g | Colonne II, 1 éq. |
|---|---|---|---|---|
| $Na^+$ | 23,0 | 1,0 | 292,1 | 12,7 |
| $K^+$ | 144,7 | 3,7 | 1536,1 | 39,3 |
| $Ca^{++}$ | 804,0 | 15,2 | 96,0 | 4,8 |
| $Mg^{++}$ | 14,4 | 1,2 | 20,4 | 1,7 |
| Total | - | 21,1 | - | 58,5 |
| Capacité pratique d'adsorption éq./l | - | 1,76 | - | 1,72 |
| Capacité théorique d'adsorption éq./l | - | - | - | 1,9 |
| Niveau de régénération éq. HCl/l de résine cationique forte (servant à régénérer la colonne II, 1 et la colonne I, 1) | | | | 2,8 |

On voit que la capacité pratique d'adsorption de la résine cationique forte correspond à environ 90 % de sa capacité théorique quand celle-ci est placée en ligne après une résine cationique faible.

**Exemples comparatifs**

1. Si on réalise une décationisation du même petit-lait classiquement en utilisant seulement une colonne remplie de résine cationique forte Amberlite® IR-120 (Rohm & Haas Company), on aboutit à un taux de décationisation total de 60,8 % cependant que la capacité pratique d'échange est de 1,1 éq./l soit seulement environ 58 % de la capacité théorique, pour un niveau de régénération de 2,2 éq.HCl/l de résine.

2. L'utilisation d'une colonne de résine cationique faible Amberlite® IRC-84 (Rohm & Haas Company) seule pour déminéraliser le même petit-lait conduit à un taux de décationisation de 20,3 % avec une capacité pratique d'échange de 1,47 éq./l pour un niveau de régénération de 2,5 éq.HCl/l de résine.

**Exemples 2 - 4**

Exemple 2

On utilise l'agencement représenté à la figure 2 pour décationiser 522 kg de petit-lait doux concentré à 19,15 % de matière sèche, de pH 6,4, à la température de 13°C avec un débit de 3,6 l/min. successivement : de haut en bas par le conduit 20 à travers la colonne I, 2 chargée de 24 l de résine cationique faible Amberlite® IRC-84 (Rohm & Haas Company) , de haut en bas par le conduit 21 à travers la colonne II, 2 chargée de 26 l de résine cationique forte Amberlite® IR-120 (Rohm & Haas Company) puis de haut en bas par le conduit 22 à travers la colonne III, 2 chargée de 26 l de résine cationique forte Amberlite® IR-120 (Rohm & Haas Company). Le petit-lait décationisé sort par le conduit 23.

Exemple 3

On procède comme pour l'exemple 2 pour décationiser 792 kg de petit-lait doux concentré à 19,62 % de matière sèche, de pH 6,22, à la température de 12°C avec un débit de 3,3 l/min.

Exemple 4

On procède comme pour l'exemple 2 pour décationiser 559 kg de petit-lait doux concentré à 19,85 % de matière sèche, de pH 6,32, à la température de 12°C avec un débit de 3,6 l/min.

Le tableau 3 ci-dessous donne la composition du petit-lait de départ, les quantités des principaux cations avant et après la décationisation ainsi que le pH après la décationisation.

**Tableau 3**

| Exemple | 2 | | 3 | | 4 | |
|---|---|---|---|---|---|---|
| Composition du petit-lait sur matière sèche (%) | avant | après | avant | après | avant | après |
| Protéines (azote.6,38) | 13,63 | 13,06 | 14,3 | 13,7 | 12,8 | 13,7 |
| Lactose | 72,6 | 75,2 | 70,3 | 75,0 | 72,0 | 75,9 |
| Cendres dont | 7,78 | 3,31 | 7,49 | 3,43 | 8,31 | 3,47 |
| Na+ (mg/100g) | 706 | 75 | 724 | 430 | 932 | 46 |
| K+ (mg/100 g) | 2309 | 13 | 2329 | 879 | 2348 | 3 |
| Ca++ (mg/100 g) | 513 | 13 | 490 | 12 | 524 | 9 |
| Mg++ (mg/100 g) | 117 | 13 | 115 | 28 | 113 | 2 |
| pH | - | 1,2 | - | 2,1 | - | 1,0 |

Le tableau 4 ci-dessous donne le taux de décationisation en % par rapport à la quantité de départ exprimée en mg/ 100 g de matière sèche.

**Tableau 4**

| Exemple | 2 | 3 | 4 |
|---|---|---|---|
| Na+ | 89,4 | 40,4 | 95,1 |
| K+ | 99,4 | 62,3 | 99,9 |
| Ca++ | 97,5 | 97,5 | 98,3 |
| Mg++ | 88,9 | 75,6 | 98,2 |

**Transformation en produit lactosérique déminéralisé**

On fait passer 110 l du produit décationisé de l'exemple 4 à travers une colonné remplie de 28 l de résine anionique faible à base-de co-polymère divinylbenzène-styrène portant des groupes aminés en cycle $OH^-$, Amberlite® IR-93 (Rohm & Haas Company), avec un débit de 2,15 l/min. de haut en bas. On obtient ainsi un liquide dont les caractéristiques de pH et de la composition sont indiqués dans le tableau 5.

**Tableau 5**

| Composition du petit-lait sur matières sèches (%) | |
|---|---|
| Protéines (azote 6,38) | 14,58 |
| Lactose | 81,3 |
| Cendres dont | 0,62 |
| Na+ (mg/100 g) | 30 |
| K+ (mg/100 g) | 12 |
| Ca++ (mg/100 g) | 36 |
| Mg++ (mg/100 g) | 2 |
| $Cl^-$ (mg/100 g) | 1,3 |
| P (mg/100 g) (sous différentes formes ioniques, principalement sous forme d'ions phosphate monovalent) | 163 |
| Acide citrique (sous différentes formes ioniques) | 0,72 |
| pH | 4,6 |

Après neutralisation et séchage, on obtient un produit lactosérique déminéralisé dont la composition en lactose et en protéines est indiquée dans le tableau 5.

**Exemple 5**

On fait passer 44,5 l de petit-lait concentré à un taux de matières sèches de 23 % dont la composition et le pH sont indiqués dans le tableau 6 ci-après successivement :

A. Dans une unité d'électrodialyse comprenant 5 cellules à la température de 30° C et sous une tension de 300 V, à un débit de 88 l/min. jusqu' à un taux de déminéralisation total de 68,5 %.

B. A travers un ensemble de décationisation comprenant en série 1 colonne remplie avec 1 l de résine cationique faible Amberlite® IRC-84 et 2 colonnes remplies chacune avec 1 l de résine cationique forte Amberlite® IRC-120, et

C. A travers une colonne de désanionisation remplie avec 1,5 l de résine anionique faible Amberlite® IRA-93.

**Tableau 6**

| Composition du petit-lait sur matière sèche (%) | Départ | après A | après B | après C |
|---|---|---|---|---|
| Protéines (azote 6,38) | 12,03 | 12,46 | 13,09 | 13,48 |
| Lactose | 72,99 | 78,86 | 81,03 | 82,21 |
| Cendres dont | 8,16 | 2,57 | - | - |
| Na+ (mg/100 g) | 886 | 260 | 22 | 23 |
| K+ (mg/100 g) | 2423 | 315 | 18 | 18 |
| Ca++ (mg/100 g) | 569 | 416 | 31 | 27 |
| Mg++ (mg/100g) | 123 | 88 | 18 | 14 |
| Cl- (mg/100 g+) | 1702 | 51 | - | 0 |
| P (mg/100 g) (sous différentes formes ioniques selon le pH) | 651 | 340 | - | 150 |
| Acide citrique (sous différentes formes ioniques selon le pH) | 2,48 | 1,68 | - | 0,27 |
| pH | 6,31 | 5,80 | 2,78 | 4,85 |

Après neutralisation et séchage, on obtient un produit lactosérique déminéralisé dont la composition en lactose et protéines est indiquée dans le tableau 6.

**Exemple 6**

La décationisation du petit-lait en suivant la procédure de l'exemple 3 en utilisant des colonnes I (1200 l, Amberlite® IRC-84 (Rohm & Haas Company)), II (1300 l, Amberlite® IR-120 (Rohm & Haas Company)) et III (1300 l, Amberlite® IR-120 (Rohm & Haas Company)) avec un débit de 10800 l/h en 152 min. conduit à une charge des colonnes correspondant à 1,68 éq./l (I), 1,8 éq./l (II) et 1,8 éq./l (III).

On pousse le petit-lait résiduel, on rince à l'eau et on pousse l'eau dans le sens I→II→III, l'ensemble de ces opérations durant environ 25 min.. On détasse les résines en faisant circuler de l'eau puis de l'air de bas en haut en parallèle (I, II, III) pendant environ 7 min. et on les lave en faisant circuler de l'eau à un débit de 20000 l/h de bas en haut dans le sens I→II→III pendant environ 25 min.

On fait ensuite circuler de l'eau de bas en haut dans le sens II→I, III par paliers successifs de 10000 et de 5000 l/h en 10 min. ce qui permet de classer les billes de résine par grandeur, les plus petites venant en haut des colonnes. On procède ensuite à la mise à niveau du liquide en environ 10 min.. Les colonnes sont alors prêtes à être régénérées.

Régénération

Dans le système de colonnes ci-dessus, l'expérience a montré qu'il faut prévoir pour une régénération appropriée la quantité d'HCl correspondant à la capacité pratique moyenne d'adsorption soit environ 2,9 éq. HCl/l de résine au niveau de la colonne I pour une capacité pratique d'adsorption de 1,7 éq./l.

On fait circuler 2850 l d'une solution d'acide chlorhydrique à 10 % (correspondant à 298 kg d'HCl pur) de haut en bas des colonnes dans le sens III→II→I, inverse de la décationisation par les conduits 24, 25 et 26 pendant 35 min.. Par le conduit 27, on évacue l'ensemble des effluents dont 1000 l d'une solution d'HCl à 5 % (52,3 kg) en fin d'opération.

Après la régénération, on lave les colonnes avec de l'eau à un débit de 5000 l/h pendant 30 min. de haut en bas dans le sens III→II→I et on les remet à niveau en introduisant de l'eau dans le sens I→II→III. Elles sont alors prêtes pour une nouvelle décationisation.

**Exemple 7**

On régénère de la même manière que dans l'exemple 6 l'agencement selon l'exemple 1 avec une solution aqueuse d'HCl fournissant l'équivalent de 3,5 kg d'HCl pur par les conduits 13, 14 et 15 de haut en bas dans le sens II→I.

**Exemple comparatif**

3. Une décationisation selon l'exemple comparatif 1 de la même quantité de petit-lait nécessite l'équivalent de 4,8 kg d'HCl pur.

**Exemple 8**

On procède à la régénération des colonnes comme dans l'exemple 6, sauf qu'on fait circuler 980 l d'une solution d'HCl à 5 % à partir de la cuve tampon 2 par le conduit 29, solution récupérée à la sortie de la colonne I par le conduit 28 provenant d'une régénération précédente, de haut en bas à travers les colonnes II→I en 12 min., puis 2500 l d'une solution d'HCl à 10 % neuve de haut en bas dans le sens III→II→I en 30 min. et qu'on évacue l'équivalent de 3,4 kg d'HCl pur par le conduit 27 en 30 min.. On régénère ainsi les colonnes en utilisant l'équivalent de 261 kg d'HCl pur.

**Exemple comparatif**

4. Par comparaison, une décationisation selon l'exemple comparatif 1 de la même quantité de petit-lait nécessite l'équivalent de 360 kg d'HCl pur pour régénérer la colonne de résine cationique forte.

**Revendications**

1. Procédé de décationisation de petit-lait par échange d'ions au moyen de résines cationiques, dans lequel on traite un petit-lait préalablement concentré jusqu' à une teneur en matières sèches de 19 à 23 % en poids, respectivement un tel petit-lait concentré préalablement déminéralisé à 30 - 70 % par électrodialyse, caractérisé par le fait qu'on le fait passer d'abord à travers une résine cationique faible non macro-poreuse en cycle $H^+$, puis à travers une résine cationique forte non macro-poreuse en cycle $H^+$, jusqu' à atteindre un pH de 1,0 à 2,5 et un taux de décationisation de 60 à 80 %, respectivement un pH de 2,0 à 3,5 et un taux de décationisation de 70 à 95 % dans le cas d'un petit-lait préalablement électrodialysé, qu'on régénère les résines en faisant passer une solution aqueuse concentrée d'un acide à travers la résine cationique forte puis à travers la résine cationique faible, que les résines sont en lits séparés ou stratifiés et que le rapport du volume apparent de résine cationique faible au volume apparent de résine cationique forte est 1:3 à 1:1.

2. Procédé selon la revendication 1, caractérisé par le fait qu'on fait passer le petit-lait successivement de haut en bas à travers une première colonne chargée de résine cationique faible en cycle $H^+$, de haut en bas à travers une deuxième puis une troisième colonne chargées de résine cationique forte en cycle $H^+$.

3. Procédé selon la revendication 2, caractérisé par le fait que le pH du produit obtenu est 1,8 à 2,1.

4. Procédé selon la revendication 2, caractérisé par le fait qu'on régénère les colonnes par passage d'une solution aqueuse d'acide chlorhydrique concentré successivement, de haut en bas de la troisième colonne chargée de résine cationique forte, de haut en bas de la deuxième colonne chargée de résine cationique forte puis de haut en bas de la première colonne chargée de résine cationique faible.

5. Procédé selon la revendication 3, caractérisé par le fait que l'acide sortant au bas de la première colonne est recyclé en tête de la deuxième colonne.

**Patentansprüche**

1. Verfahren zur Entfernung von Kationen aus Molke durch Ionenaustausch mittels kationischer Harze, bei dem man eine auf einen Trockenmassegehalt von 19 bis 23 Gew.-% vorkonzentrierte Molke bzw. eine derartige vorkonzentrierte Molke, die durch Elektrodialyse auf 30 bis 70 % entmineralisiert wurde, behandelt, dadurch gekennzeichnet, daß man diese zuerst durch ein schwaches, nicht makroporöses kationisches Harz in der $H^+$-Form und dann durch ein starkes, nicht makroporöses kationisches Harz in der $H^+$-Form leitet, bis man einen

pH von 1,0 bis 2,5 und einen Grad der Kationenentfernung von 60 bis 80 % bzw. im Falle einer vorher elektrodialysierten Molke einen pH von 2,0 bis 3,5 und einen Grad der Kationenentfernung von 70 bis 95 % erreicht hat, daß man die Harze dadurch regeneriert, daß man eine wäßrige konzentrierte Säurelösung durch das starke kationische Harz und dann durch das schwache kationische Harz hindurchleitet, wobei sich die Harze in getrennten Betten oder Schichtanordnungen befinden und das Verhältnis des Schüttvolumens des schwachen kationischen Harzes zum Schüttvolumen des starken kationischen Harzes von 1 : 3 bis 1 : 1 beträgt.

2. Verfahren nach Anspruch 1, dadurch gekennzeichnet, daß man die Molke nacheinander von oben nach unten durch eine erste Säule hindurchleitet, die mit dem schwachen kationischen Harz im H+-Zustand gefüllt ist, und dann von oben nach unten durch eine zweite und dann eine dritte Säule, die mit dem starken kationischen Harz im H+-Zustand gefüllt sind.

3. Verfahren nach Anspruch 2, dadurch gekennzeichnet, daß der pH des erhaltenen Produkts 1,8 bis 2,1 beträgt.

4. Verfahren nach Anspruch 2, dadurch gekennzeichnet, daß man die Säulen durch aufeinanderfolgendes Hindurchleiten einer konzentrierten wäßrigen Salzsäurelösung von oben nach unten durch die mit dem starken kationischen Harz gefüllte dritte Säule, von oben nach unten durch die mit dem starken kationischen Harz gefüllte zweite Säule sowie dann von oben nach unten durch die mit dem schwachen kationischen Harz gefüllte erste Säule regeneriert.

5. Verfahren nach Anspruch 3, dadurch gekennzeichnet, daß man die unten aus der ersten Säule austretende Säure zum Kopf der zweiten Säule zurückführt.

**Claims**

1. A process for the decationization of whey by ion exchange with cationic resins, which comprises treating a whey which has been concentrated to a dry matter content of 19 to 23 % by weight, respectively such a concentrated whey which has been demineralized to 30 - 70 % by electrodialysis , characterized in that it is successively passed through a non macroporous weak cationic resin in the H+ cycle, and then through a non macroporous strong cationic resin in the H+ cycle, until reaching a pH of 1,0 to 2,5 and a degree of decationization of 60 to 80 %, respectively a pH of 2,0 to 3,5 and a degree of decationization of 70 to 95 % in the case of a whey which has been electrodialyzed, in that the resins are regenerated by passing a concentrated 15 aqueous solution of an acid through the strong cationic resin and then through the weak cationic resin, in that the resins are in separate or layered beds and in that the ratio of bulk volume of weak cationic resin to the bulk volume of strong cationic resin is 1:3 to 1:1.

2. A process as claimed in Claim 1, characterized in that the whey is successively passed downwards through a first column charged with weak cationic resin in the H+ cycle, downwards through a second and then a third column charged with strong cationic resin in the H+ cycle.

3. A process as claimed in claim 1, characterized in that the pH of the product obtained is 1.8 to 2.1.

4. A process as claimed in claim 2, characterized in that the columns are regenerated by passing a concentrated aqueous solution of hydrochloric acid successively downwards through the third column charged with strong cationic resin, downwards through the second column charged with strong cationic resin and then downwards through the first column charged with weak cationic resin.

5. A process as claimed in Claim 4, characterized in that the acid issuing from the bottom of the first column is recycled to the head of the second column.

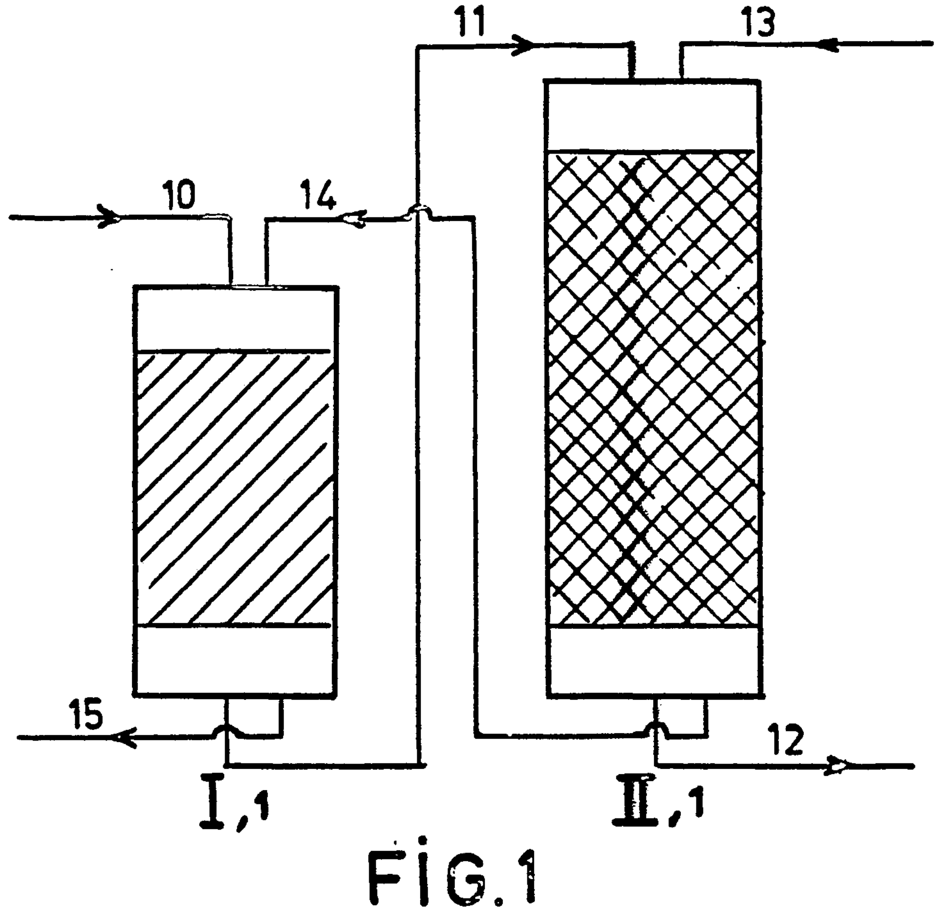


FIG.1

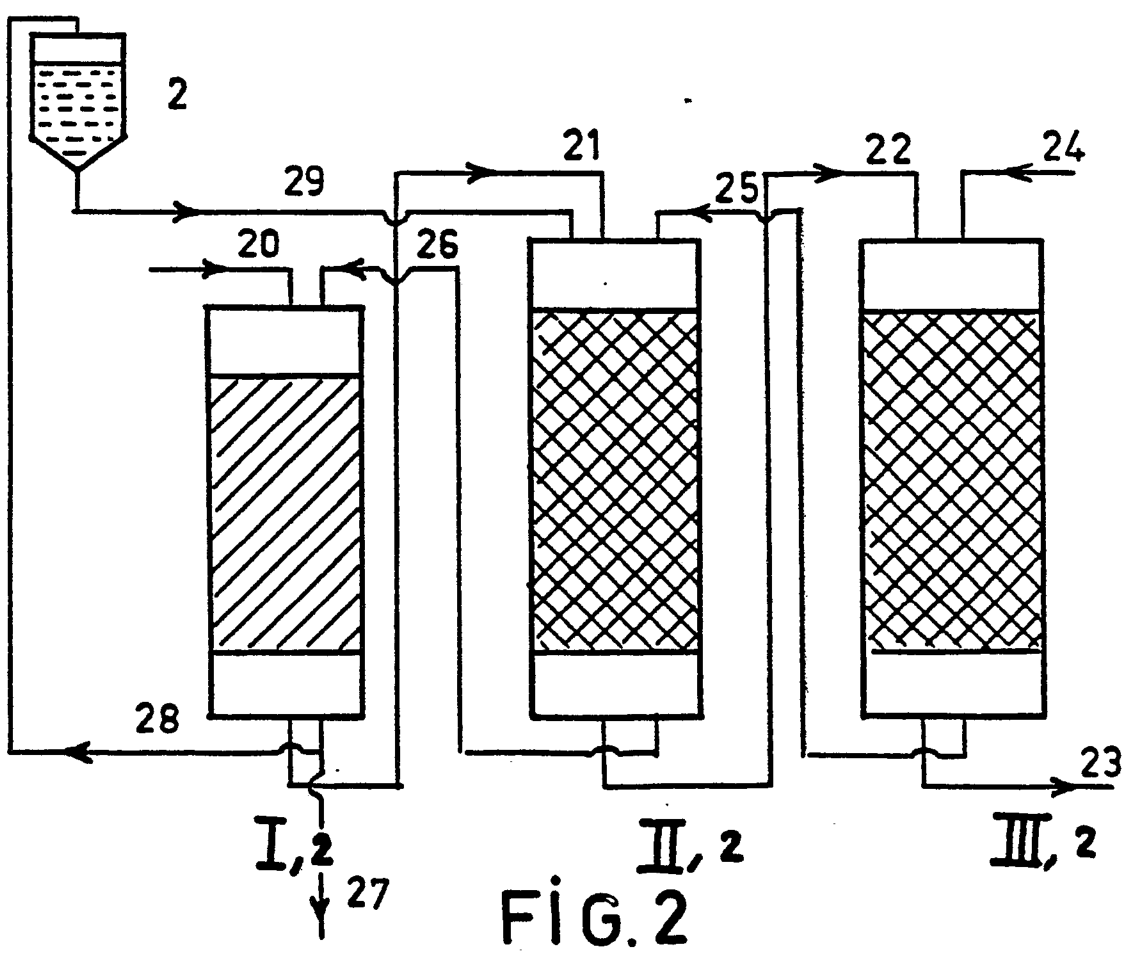


FIG.2